# EUROPEAN PATENT SPECIFICATION

(11) **EP 3 884 194 B1**
(45) Date of publication and mention of the grant of the patent: **28.06.2023**
(21) Application number: 19727124.0
(22) Date of filing: 25.02.2019
(51) Int. Cl.: F16L 21/00, F16L 21/02, F16L 21/08, F16L 37/14, F16L 37/15

(54) **ARRANGEMENT OF DETACHABLE AND OPTIONALLY SEALED INTERCONNECTION BETWEEN A MALE AND FEMALE CONSTRUCTION PART**
ANORDNUNG ZUR LÖSBAREN UND GEGEBENENFALLS ABGEDICHTETEN VERBINDUNG ZWISCHEN EINEM STECKER- UND EINEM BUCHSENBAUTEIL
AGENCEMENT D'INTERCONNEXION AMOVIBLE ET ÉVENTUELLEMENT ÉTANCHE ENTRE UNE PIÈCE DE CONSTRUCTION MÂLE ET UNE PIÈCE DE CONSTRUCTION FEMELLE

(30) Priority: 23.11.2018 SI 201800255
(43) Date of publication of application: 29.09.2021
(73) Proprietor: Univerza V Ljubljani, 1000 Ljubljana (SI)
(72) Inventor: MACEK, Andraz, 1292 Ig (SI); UREVC, Janez, 4000 Kranj (SI); HALILOVIC, Miroslav, 1000 Ljubljana Ljubljana (SI)
(74) Representative: Borstar, Dusan
(86) International application number: PCT/SI2019/000003
(87) International publication number: WO 2020/106223

(56) References cited:
- DE-A1-102016 123 031
- US-A- 5 882 048
- US-A1- 2012 280 489

## Description

The present invention refers to an arrangement of detachable and optionally sealed interconnection between a male and female construction part. Pursuant to the International patent Classification such inventions belongs to mechanical engineering, namely either to the field of couplings or fittings suitable for connecting pipes by arresting in the class F 16 L 3/13, or substantially also to quickly established pipe connections, in which a connection between two in their axial direction mutually overlapping parts is established and maintained by means of an arresting member, wherein in such case the invention belongs to the class F 16 L 37/08.

The purpose of the invention is to create, by means of simple measures and by using a small number of necessary components, a simple and reliable detachable interconnection between a female construction part and a male construction part, which is axially insertable there-into, wherein such interconnection should be feasible both in the case, when said parts are tubular, as well as in the case, when one of said parts is blank i.e. has a blank transversal cross-section, and wherein said interconnection between both construction parts could optionally also be sealed, but in each case such interconnection would have to be established quickly and simply, and upon that also quickly and simply disassembled, preferably without any need on using supplemental parts or tools to this aim.

Various arrangements of connecting tubes are known in the state of the art, and are disclosed e.g. in EP 2 827 038 A1, EP 0 751 334 B1, CN 107504297 A, CN 102966817 B. GB 2 489 097 A and numerous other patent documents and non-patent literature. Most of them are pretty complicated and include numerous quite complicated components, by means of which then a detachable and usually also sealed connection can be established, and moreover, in most cases assembling or disassembling thereof is possible only by using either ordinary or special hand tools. However, said need on availability of a plurality of components is related not only to correspondingly high costs of manufacturing of all required components, but also to additional risk of damages or functional irregularities of each particular component and consequently of such assembly as a whole, and at the same time there is also the probability that before assembling certain components may be missing, in particular by performing works in situ or e.g. in the area of complicated industrial installation systems.

In a pipe coupling, namely a coupling for interconnection of a male construction part with a female construction part, which consists of a relatively small number of components and is disclosed in GB 2 489 097 A, a male part with a cylindrical inserting protrusion and a female part with a cylindrical receiving cavity are foreseen, wherein said insertion protrusion of the male part is smoothly insertable into said receiving cavity in the female part. Inside of said receiving cavity there is a plurality of grooves available, which are spaced apart from each other in axial direction and are each per se uninterrupted in the circumferential direction, and ring-shaped seals, optionally O-rings, are inserted into said grooves and are rest on the external surface of the inserting protrusion on the male part. Moreover, a conical groove is available on said cylindrical internal surface of the female part, which diverges in a direction towards the interior of said receiving cavity, i.e. converges outwardly, and in a corresponding position, when bearing in mind that the connection between both parts is established, a circumferentially extending groove is available on the male part, which represents a seat for a resilient ring, which is intended for securing said interconnection between the male and female part. Said resilient ring is created as a wire with round cross-section, which is circularly bent and consists of a resilient material. Diameter of the wire, of which the ring consists, should not exceed one third of the length of said conical groove in the axial direction. Prior to establishing connection between said male and female part, said ring is placed to its position, upon which such assembly is inserted into the female part. By establishing the connection said ring enters between the male and female part and is due to its resilience maintained in its position. By axially forcing the male part, which could generally result in separation of male and female part, said resilient ring is jammed between male part and the inclination in the conical groove on the female part. In this connection should however be annotated, that when bearing in mind the previously expressed requirements said resilient ring is pretty thin, and moreover, its contact area on both circumferential surfaces on the male and female part is just a line and not e.g. a surface, so that in the case of essential loads in the axial direction both the resilient ring as such and also its counter contact surfaces on the male and female part are exposed to extreme stresses. This deficiency is in particular problematic when the materials of the male and female part and the ring are essentially different in view of hardness or strength, e.g. when the male and female part consists of plastics, and the resilient ring is made of spring-steel. In such case by an essential loading of the coupling between the male and female part in axial direction thereof said ring might even be impressed into said inclination in the conical groove on the female part or may damage lateral surface in the groove on the male part. A still further deficiency occurs by disassembling of such interconnection, which is feasible only by means of a special tool, which is inserted in axial direction into a gap between the male and female part in order to reach somehow said resilient ring and compress it to such extent that its diameter is sufficiently reduced to enable extraction of the male part out from the female part.

Arrangements of detachable interconnection between a male and a female construction part are also disclosed in US 5 882 048 and DE 10 2016 123031 A1.

US 2012/2280489 A1 discloses a connecting device with an insertion section having an annular outer groove, with a housing into which the insertion section can be inserted and with a blocking element with which the insertion section inserted into the housing can be locked in the housing, the blocking element for locking the insertion section in the housing engaging the outer groove and an annular inner groove formed in the housing, the blocking element being able to be pulled out of the grooves through a housing opening substantially tangentially to the grooves, wherein the blocking element can be pre-assembled in the inner groove and, in the pre-assembled state, allows the insertion section to be inserted into the housing with elastic deflection and thereby engages in the outer groove, wherein the blocking element in pre-assembled state on the housing is secured against displacement in the circumferential direction.

The present invention provides an arrangement according to claim 1. Preferred embodiments are subject-matter of the dependent claims.

The present invention refers to an arrangement of a detachable and optionally scaled interconnection between a male and female construction part. In this, the female part is on its connecting end portion furnished with a substantially cylindrical receiving cavity, into which a substantially cylindrical inserting protrusion on a connecting end portion of said male part is insertable smoothly i.e. with a sufficient clearance. Said male part and said female part are in their at least partially overlapping position along their common geometric axis through said receiving cavity in a female part and said inserting protrusion on said male part detachably connectable with each other by means of an arresting member, and moreover, said interconnection between said male part and said female part is optionally sealable by means of at least one seal.

Said cylindrical inserting cavity in a female part is furnished with a continued circumferentially extending groove, which is adapted to receive said arresting member, and is at appropriate distance apart from said groove in a direction inwardly and along said geometric axis ended with a radial resting surface, which extends at least approximately perpendicularly with respect to said longitudinal axis, while said male part is in the area of its inserting portion furnished with a thicker area, the peripheral diameter of which is in for the purpose of smoothly insertion adapted to the inner diameter of said receiving cavity in said female part, and on which a continued circumferentially extending groove is arranged. The invention provides that said groove comprises at least a conical inclination, which is diverging in the longitudinal direction of said protrusion and apart from the rest of said male part and therefore in a direction of inserting said male part into said female part, as well as at least one radially extending resting surface, which is available on at least a part of the circumference of said connecting protrusion, wherein said thicker area is on its terminal portion, which is faced apart from the male part as such, namely in a direction of inserting the male part into the female part, ended with a radially extending terminal resting surface.

Said arresting member is conceived as a resilient and due to allowing a reversible changing of its diameter circumferentially discontinued ring, and the external transversal profile thereof at least along the majority of its circumference corresponds to the transversal profile of said groove in the inserting cavity in the female part, so that said arresting member then matches with said groove, while the inner surface of said arresting member is conical, and is suitable for resting on said conical surface of said groove on the inserting protrusion on the connecting end portion of the male part. The invention also provides that said circumferentially discontinued arresting member is in the area of each of its terminal portions adjacent to said circumferential discontinuation furnished each time with at least one manipulating means, which protrude(s) outside from the area of mutually overlapping of said male part and said female part, and by means of which each desired diameter of the arresting member is adjustable from outside, in particular from the area of the external surface of the male part, by which said arresting member is either insertable into said groove and also removable from said groove.

The arrangement of, on the one hand said groove and said resting surface in the receiving cavity in the female part, as well as said groove and said resting surfaces on the male part on the other hand, is determined in such manner, that upon inserting said male part into said female part the arresting member is in the area of its periphery inserted within the groove in the receiving cavity in the female part and is at the same time in the area of its inner conical surface rest on said conical inclination in the groove on the thicker area of the male part. The invention also provides that the distance between the radial terminal resting surface on the male part and the radial resting surface in the receiving cavity on the female part is at minimum such, that at least such displacement of the male part relative to the female part along the longitudinal axis is allowed, that the arresting member can be moved along the conical surface in the groove on the male part at such extent, which enables removal of said arresting member from the groove in the female part and consequently also removal of the inserting protrusion of the male part from the receiving cavity in the female part.

In one of possible embodiments of the invention a resting surface is arranged on the free terminal portion of the male part adjacent to said terminal resting surface, by which said thicker area is ended, and a seal, which is uninterrupted along its complete circumference, is placed on said resting surface and is on the other hand adapted to cooperate with a surface of the cylindrical receiving cavity within the female part. Said seal is optionally a flexible O-ring, which is adapted to cooperate on the one hand with said resting surface and the terminal resting surface on the inserting protrusion of the male part, and on the other hand with the surface of the cylindrical receiving cavity within the female part and also with the adjacent resting surface.

In a still further embodiment of the invention, said male part, or optionally also a female part, is furnished with at least one throughout opening, which extends at least approximately along said longitudinal geometric axis, which extends through said inserting protrusion of the male part and said receiving cavity of the female part, which are to be connected with each other.

Each of said parts, namely either the male part or optionally also the female part, is optionally tubular, or may also be formed as appropriately rigid pipe coupling for a flexible pipe.

Moreover, the invention provides that at least one of said parts, which are foreseen to be connected with each other, may consists either of a metallic or a non-metallic material. Said non-metallic material is selected from materials on the basis of minerals, in particular ceramics, thermoplastic materials or thermosetting plastics or composite materials on the basis of reinforced artificial resins.

The arresting member generally consists of appropriately strong and resilient metallic or optionally non-metallic material, wherein in a preferred embodiment of the invention the cross-section of said arresting member, by which its external transversal profile is defined, is trapezoidal, and said groove on the female part is rectangular in profile, so that such shaped arresting member can be smoothly inserted into said groove on the female part and substantially without the possibility of being displaced to and fro in the axial direction.

The invention also provides a possibility, that the angle of inclination on the male part is adjusted to inclination of the internal conical surface on the arresting member, such that self-stopping effect can be assured between the male part and the arresting member.

The invention will also be explained in more detail on the basis of an embodiment, which is presented in the attached drawings, in which
- Fig. 1: presents an arrangement of detachable and optionally sealed interconnection between a male and female construction part, which is shown in a longitudinal cross-section in a diametrical plane and in the assembled state;
- Fig. 2: presents an arrangement of detachable and optionally sealed interconnection between a male and female construction part, which is shown in a longitudinal cross-section in a diametrical plane and in the disassembled state; and
- Fig. 3: is the arresting member of the arrangement according to Figs. 1 and 2, in side view.

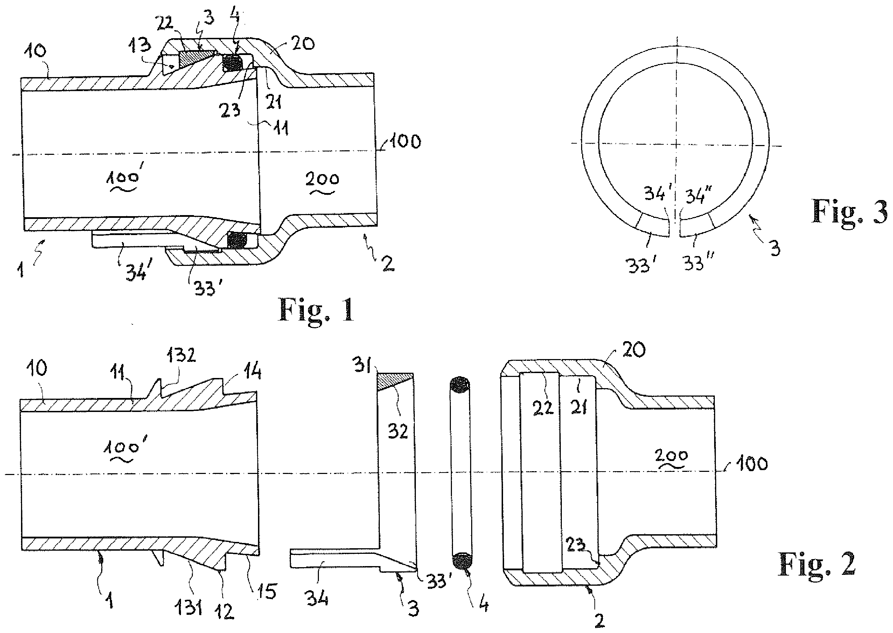

Arrangement of detachable and optionally sealed interconnection between a male and female construction part 1, 2 is shown in Fig. 1. In this, the female part 2 is on its connecting end portion 20 furnished with a substantially cylindrical receiving cavity 21, into which a substantially cylindrical inserting protrusion 11 on a connecting end portion 10 of said male part 1 is smoothly insertable, i.e. under a sufficient clearance fit. Consequently, said male part 1 and said female part 2, which are separately presented in Fig. 2, are in their at least partially overlapping position along the geometric axis 100 of said receiving cavity 21 in a female part 2 and said inserting protrusion 11 on said male part 1 are detachably connectable with each other by means of an arresting member 3. Moreover, said interconnection between said male part 1 and said female part 2 is optionally sealable by means of at least one seal 4.

As furthermore shown in Figs. 1 and 2, said cylindrical inserting cavity 21 in a female part 2 is furnished with a continued circumferentially extending groove 22, which is adapted to receive said arresting member 3, and is at appropriate distance apart from said groove 22 in a direction inwardly and along said geometric axis 100 ended with a radial resting surface 23, which extends at least approximately perpendicularly with respect to said longitudinal axis 100. Said male part 1 is in the area of its inserting portion 11 furnished with a thicker area 12, the peripheral diameter of which is in for the purpose of smoothly insertion adapted to the inner diameter of said receiving cavity 21 in said female part 2, and on which a continued circumferentially extending groove 13 is arranged.

Said groove 13 comprising at least a conical inclination 131, which is diverging in the longitudinal direction of said protrusion 11 and apart from the rest of said male part 1 and therefore in a direction of inserting said male part 1 into said female part 2, and at the same time also at least one radially extending resting surface 132, which is available on at least a part of the circumference of said connecting protrusion 11. Said thicker area 12 is on its terminal portion, which is faced apart from the male part 1 as such, namely in a direction of inserting the male part 1 into the female part 2, ended with a radially extending terminal resting surface 14.

Said arresting member 3, which is separately presented in Fig. 3, is conceived as a resilient ring, which is due to allowing a reversible changing of its diameter interrupted i.e. discontinued in its circumferential direction, and the external transversal profile of which at least along the majority of its circumference corresponds to the transversal profile of said groove 22 in the inserting cavity 21 in the female part 2.

Consequently, said arresting member 3 therefore matches with said groove 2, wherein the inner surface 32 of said arresting member 3 is conical and is suitable for resting on said conical surface 13 1 of said groove 13 on the inserting protrusion 11 on the connecting end portion 10 of the male part 1. Moreover, said circumferentially discontinued arresting member 3 is in the area of each of its terminal portions 33', 33" adjacent to said circumferential discontinuation furnished each time with at least one manipulating means 34', 34", which protrude(s) outside from the area of mutually overlapping of said male part 1 and said female part 2, and by means of which each desired diameter of the arresting member 3 is adjustable from outside, in particular from the area of the external surface of the male part 1, by which said arresting member 3 is either insertable into said groove 22 and also removable from said groove 22.

The arrangement, on the one hand of said groove 22 and said resting surface 23 in the receiving cavity 21 in the female part 2, and on the other hand of said groove 13 and said resting surfaces 131, 14 on the male part 1 is determined in such manner that upon inserting said male part 1 into said female part 2 the arresting member 3 is in the area of its periphery inserted within the groove 22 in the receiving cavity 21 in the female part 2 and is at the same time in the area of its inner conical surface 32 rest on said conical inclination 131 in the groove 13 on the thicker area 13 of the male part 1. The distance between the radial terminal resting surface 14 on the male part 1 and the radial resting surface 23 in the receiving cavity 21 on the female part 2 is at minimum such, that optionally at least such displacement of the male part 1 relative to the female part 2 along the longitudinal axis 100 is allowed, that the arresting member 3 can be moved along the conical surface 131 in the groove 13 on the male part 1 at such extent, which enables removal of said arresting member 3 from the groove 22 in the female part 2 and consequently also removal of the inserting protrusion 11 of the male part 1 from the receiving cavity 21 in the female part 2.

In the embodiment according to Fig. 1 the connection between the parts 1, 2 is sealable. To this aim, a resting surface 15 is arranged on the free terminal portion 11 of the male part 1 adjacent to said terminal resting surface 14, by which said thicker area 12 is ended, and a seal 4, which is uninterrupted along its complete circumference, is placed on said resting surface 15 and is on the other hand adapted to cooperate with a surface of the cylindrical receiving cavity 21 within the female part 2. In the shown embodiment said resting surface is cylindrical, and said seal is a flexible O-ring, which is adapted to cooperate on the one hand with said resting surface 15 and the terminal resting surface 14 on the inserting protrusion 11 of the male part 1, and on the other hand with the surface of the cylindrical receiving cavity 21 within the female part 2 and also with the adjacent resting surface 23.

The male part 1 can be optionally furnished with at least one throughout opening 100', which extends at least approximately along said longitudinal geometric axis 100 extending through said inserting protrusion 11 of the male part 1 and said receiving cavity 21 of the female part, which are to be connected with each other. Quite analogously, also the female part 2 can be optionally furnished with at least one throughout opening 200', which extends at least approximately along said longitudinal geometric axis 100 extending through said inserting protrusion 11 of the male part 1 and said receiving cavity 21 of the female part, which are to be connected with each other.

In the embodiment, which is shown in Figs. 1 and 2, said male part 1 is tubular, but the invention also provides that said male part 1 can formed as appropriately rigid pipe coupling on a flexible pipe, which is suitable for establishing each required interconnection with the female part 2. In this embodiment also said female part 2 is tubular, and said female part 2 can also formed as appropriately rigid pipe coupling of a flexible pipeline, which is suitable for establishing connection with the male part 1.

The invention can be realized both in the case when at least one of said parts 1, 2, which are foreseen to be connected with each other, consists of a metallic material, as well as in the case when at least one of said parts 1, 2, which are foreseen to be connected with each other, consists of a non-metallic material, which is selected from materials on the basis of minerals, in particular ceramics, thermoplastic materials or thermosetting plastics or composite materials on the basis of reinforced artificial resins.

The arresting member 3 in the shown embodiment consists of appropriately strong and resilient metallic material, however the invention is in principle also feasible, if the arresting member 3 would be made of appropriately strong and resilient non-metallic material.

In the shown embodiment the cross-section of said arresting member 3, by which its external transversal profile is defined, is trapezoidal, and said groove 22 on the female part 2 is rectangular in profile, wherein such shaped arresting member 13 is smoothly i.e. with a sufficient clearance insertable into said groove 22 on the female part 2 substantially without the possibility of being displaced to and fro in the axial direction.

Moreover, a further possibility persists in the shown embodiment, namely that the angle of inclination 131 on the male part 1 is accommodated to the inclination of the internal conical surface 32 on the arresting member 3 in such manner that self-stopping effect is assured between the male part 1 and the arresting member 3. In such case an extremely reliable interconnection between the parts 1, 2 can be established, which is however still detachable, although only upon performing a sufficient movement of the male part relatively to the female part 2 along said longitudinal geometric axis 100.

## Claims

1. Arrangement for a detachable and optionally sealed interconnection between a male and female construction part (1, 2), the arrangement comprising the female part (2), the male part (4) and an arresting member (3), wherein the female part (2) is on its connecting end portion (20) furnished with a substantially cylindrical receiving cavity (21), into which a substantially cylindrical inserting protrusion (11) on a connecting end portion (10) of said male part (1) is insertable smoothly i.e. with a sufficient clearance insertable, and wherein said male part (1) and said female part (2) in their at least partially overlapping position along a common geometric axis (100) of said receiving cavity (21) in the female part (2) and said inserting protrusion (11) on said male part (1) are detachably connectable with each other by means of the arresting member (3), and moreover, said interconnection between said male part (1) and said female part (2) is optionally scalable by means of at least one seal (4),
wherein said cylindrical receiving cavity (21) in the female part (2) is furnished with a continued circumferentially extending groove (22), which is adapted to receive said arresting member (3), and said receiving cavity (21) is at appropriate distance apart from said groove (22) in a direction inwardly and along said geometric axis (100) ended with a radial resting surface (23), which extends at least approximately perpendicularly with respect to said longitudinal axis (100),
and wherein said male part (1) is in the area of its inserting protrusion (11) furnished with a thicker area (12), the peripheral diameter of which is for the purpose of said smooth inserting adapted to the inner diameter of said receiving cavity (21) in said female part (2), and on which a continued circumferentially extending groove (13) is arranged, said groove (13) comprising at least a conical inclination (131) and at least one radially extending resting surface (132), which is available on at least a part of the circumference of said inserting protrusion (11) wherein said thicker area (12) on the male part (1) is on its terminal portion, which is faced apart from the male part (1) as such, namely in a direction of inserting the male part (1) into the female part (2), ended with a radially extending terminal resting surface (14),
and wherein said arresting member (3) is conceived as a resilient and due to allowing reversible changing of its diameter circumferentially discontinued ring, the external transversal profile of which at least along the majority of its circumference corresponds to the transversal profile of said groove (22) in the receiving cavity (21) in the female part (2), so that said arresting member (3) then matches with said groove (22) while the inner surface (32) of said arresting member (3) is conical and is suitable for resting on said conical surface (131) of said groove (13) on the inserting protrusion (11) on the connecting end portion (10) of the male part (1), wherein the configuration on the one hand of said groove (22) and said resting surface (23) in the receiving cavity (21) in the female part (2), and on the other hand of said groove (13) and said resting surfaces (132, 14) on the male part (1) is determined in such manner that upon inserting of said male part (1) into said female part (2) the arresting member (3) is in the area of its periphery inserted within the groove (22) in the receiving cavity (21) in the female part (2) and is at the same time in the area of its inner conical surface (32) rest on said conical inclination (131) in the groove (13) on the thicker area (12) of the male part (1),
wherein said conical inclination (131) in the groove (13) on the male part (1) diverges in the longitudinal direction of said inserting protrusion (11) and apart from the rest of said male part (1) and therefore in a direction of inserting said male part (1) into said female part (2),
wherein the distance between the radial terminal resting surface (14) on the male part (1) and the radial resting surface (23) in the receiving cavity (21) on the female part (2) is at minimum such, that at least such displacement of the male part (1) relative to the female part (2) along the longitudinal axis (100) is allowed, that the arresting member (3) can be moved along the conical surface (131) in the groove (13) on the male part (1) at such extent, that removal of said arresting member (3) from the groove (22) in the female part (2) and consequently also removal of the inserting protrusion (11) of the male part (1) from the receiving cavity (21) in the female part (2) is enabled,
and wherein said circumferentially discontinued arresting member (3) is in the area of each of its terminal portions (33', 33") adjacent to said circumferential discontinuation furnished with at least one manipulating means (34', 34") protruding outside from the area of mutually overlapping of said male part (1) and said female part (2), and by means which manipulating means (34', 34") each desired diameter of the arresting member (3) is adjustable from outside, in particular from the area of the external surface of the male part (1), by which said arresting member (3) is either insertable into said groove (22) or also removable from said groove (22).

2. Arrangement according to Claim 1, **characterized in that** a resting surface (15) is arranged on the inserting protrusion (11) of the male part (1) adjacent to said terminal resting surface (14), by which said thicker area (12) is ended, and a seal (4), which is uninterrupted along its circumference, is placed on said resting surface (15) and is on the other hand adapted to cooperate with a surface of the cylindrical receiving cavity (21) within the female part (2).

3. Arrangement according to Claim 2, **characterized in that** said seal is a flexible O-ring, which is adapted to cooperate on the one hand with said resting surface (15) and the terminal resting surface (14) on the inserting protrusion (11) of the male part (1), and on the other hand with the surface of the cylindrical receiving cavity (21) within the female part (2) and also with the adjacent resting surface (23).

4. Arrangement according to anyone of Claims 1 - 3, **characterized in that** the male part (1) is furnished with at least one throughout opening (100'), which extends at least approximately along said longitudinal geometric axis (100) extending through said inserting protrusion (11) of the male part (1) and said receiving cavity (21) of the female part, which are to be connected with each other.

5. Arrangement according to anyone of Claims 1 - 3, **characterized in that** the female part (2) is furnished with at least one throughout opening (200'), which extends at least approximately along said longitudinal geometric axis (100) extending through said inserting protrusion (11) of the male part (1) and said receiving cavity (21) of the female part, which are to be connected with each other.

6. Arrangement according to Claim 4, **characterized in that** said male part (1) is tubular.

7. Arrangement according to Claim 4, **characterized in that** said male part (1) is formed as appropriately rigid pipe coupling on a flexible pipe, which is suitable for establishing each required interconnection with the female part (2).

8. Arrangement according to Claim 5, **characterized in that** said female part (2) is tubular.

9. Arrangement according to Claim 5, **characterized in that** said female part (2) is formed as appropriately rigid pipe coupling of a flexible pipeline, which is suitable for establishing connection with the male part (1).

10. Arrangement according to anyone of Claims 1 - 9, **characterized in that** at least one of said parts (1, 2), which are foreseen to be connected with each other, consists of a metallic material.

11. Arrangement according to anyone of Claims 1 - 9, **characterized in that** at least one of said parts (1, 2), which are foreseen to be connected with each other, consists of a non-metallic material.

12. Arrangement according to Claim 11, **characterized in that** said non-metallic material is selected from materials on the basis of minerals, in particular ceramics, thermoplastic materials or thermosetting plastics or composite materials on the basis of reinforced artificial resins.

13. Arrangement according to anyone of Claims 1 - 12, **characterized in that** the arresting member (3) consists of appropriately strong and resilient metallic material.

14. Arrangement according to anyone of Claims 1 - 13, **characterized in that** the arresting member (3) consists of appropriately strong and resilient non-metallic material.

15. Arrangement according to anyone of Claims 1 - 14, **characterized in that** the cross-section of said arresting member (3), by which its external transversal profile is defined, is trapezoidal, and said groove (22) on the female part (2) is rectangular in profile, wherein such shaped arresting member (3) is smoothly insertable into said groove (22) on the female part (2) substantially without the possibility of being displaced to and fro in the axial direction.

16. Arrangement according to anyone of Claims 1 - 15, **characterized in that** the angle of inclination (131) on the male part (1) is accommodated to the inclination of the internal conical surface (32) on the arresting member (3) in such manner that self-stopping effect is assured between the male part (1) and the arresting member (3).

## Patentansprüche

1. Anordnung für eine lösbare und optional abgedichtete Verbindung zwischen einem Einsteck- und einem Aufnahmebauteil (1, 2), wobei die Anordnung das Aufnahmeteil (2), das Einsteckteil (4) und ein Arretierelement (3) umfasst, wobei das Aufnahmeteil (2) an seinem Verbindungsendabschnitt (20) mit einem im Wesentlichen zylindrischen Aufnahmehohlraum (21) versehen ist, in den ein im Wesentlichen zylindrischer Einführvorsprung (11) an einem Verbindungsendabschnitt (10) des Einsteckteils (1) leichtgängig, d. h. mit ausreichendem Spiel einführbar ist, und wobei das Einsteckteil (1) und das Aufnahmeteil (2) in ihrer zumindest teilweise überlappenden Position entlang einer gemeinsamen geometrischen Achse (100) des Aufnahmehohlraums (21) in dem Aufnahmeteil (2) und dem Einführvorsprung (11) an dem Einsteckteil (1) mittels des Arretierelements (3) lösbar miteinander verbindbar sind, und darüber hinaus die Verbindung zwischen dem Einsteckteil (1) und dem Aufnahmeteil (2) optional mittels mindestens einer Dichtung (4) abdichtbar ist, wobei der zylindrische Aufnahmehohlraum (21) in dem Aufnahmeteil (2) mit einer fortlaufenden, sich in Umfangsrichtung erstreckenden Nut (22) versehen ist, die ausgebildet ist, um das Arretierelement (3) aufzunehmen, und sich der Aufnahmehohlraum (21) in einem geeigneten Abstand von der Nut (22) in einer Richtung nach innen und entlang der geometrischen Achse (100) befindet, der mit einer radialen Auflagefläche (23) endet, die sich zumindest annähernd senkrecht zu der Längsachse (100) erstreckt, und wobei das Einsteckteil (1) in dem Bereich seines Einführvorsprungs (11) mit einem dickeren Bereich (12) versehen ist, wobei dessen Umfangsdurchmesser zum Zwecke des leichtgängigen Einführens an den Innendurchmesser des Aufnahmehohlraums (21) in dem Aufnahmeteil (2) angepasst ist, und an dem eine fortlaufende, sich in Umfangsrichtung erstreckende Nut (13) angeordnet ist, wobei die Nut (13) mindestens eine konische Neigung (131) und mindestens eine radial verlaufende Auflagefläche (132) aufweist, die an mindestens einem Teil des Umfangs des Einführvorsprungs (11) vorhanden ist, wobei sich der dickere Bereich (12) an dem Einsteckteil (1) an seinem Endabschnitt befindet, der von dem Einsteckteil (1) als solchem beabstandet ist, d. h. in einer Richtung des Einführens des Einsteckteils (1) in das Aufnahmeteil (2), der mit einer sich radial erstreckenden Endauflagefläche (14) endet,
und wobei das Arretierelement (3) als ein elastischer und durch die Ermöglichung einer reversiblen Veränderung seines Durchmessers in Umfangsrichtung unterbrochener Ring konzipiert ist, dessen äußeres Querprofil zumindest entlang dem größten Teil seines Umfangs dem Querprofil der Nut (22) in dem Aufnahmehohlraum (21) im Aufnahmeteil (2) entspricht, so dass das Arretierelement (3) dann mit der Nut (22) übereinstimmt, während die Innenfläche (32) des Arretierelements (3) konisch ist und geeignet ist, auf der konischen Fläche (131) der Nut (13) an dem Einführvorsprung (11) an dem Verbindungsendabschnitt (10) des Einsteckteils (1) aufzuliegen, wobei die Konfiguration einerseits der Nut (22) und der Auflagefläche (23) in dem Aufnahmehohlraum (21) in dem Aufnahmeteil (2) und andererseits der Nut (13) und der Auflageflächen (132, 14) an dem Einsteckteil (1) so bestimmt ist, dass beim Einsetzen des Einsteckteils (1) in das Aufnahmeteil (2) das Arretierelement (3) im Bereich seines Umfanges in der Nut (22) in dem Aufnahmehohlraum (21) in dem Aufnahmeteil (2) eingesetzt ist und gleichzeitig im Bereich seiner inneren konischen Fläche (32) auf der konischen Neigung (131) in der Nut (13) an dem dickeren Bereich (12) des Einsteckteils (1) aufliegt, wobei die konische Neigung (131) in der Nut (13) an dem Einsteckteil (1) in der Längsrichtung des Einführvorsprungs (11) und beabstandet vom Rest des Einsteckteils (1) und somit in einer Richtung des Einsetzens des Einsteckteils (1) in das Aufnahmeteil (2) divergiert, wobei der Abstand zwischen der radialen Endauflagefläche (14) an dem Einsteckteil (1) und der radialen Auflagefläche (23) in dem Aufnahmehohlraum (21) an dem Aufnahmeteil (2) mindestens so ist, dass mindestens eine solche Verschiebung des Einsteckteils (1) relativ zu dem Aufnahmeteil (2) entlang der Längsachse (100) möglich ist, dass das Arretierelement (3) entlang der konischen Fläche (131) in der Nut (13) an dem Einsteckteil (1) in einem solchen Ausmaß bewegt werden kann, dass das Entfernen des Arretierelements (3) aus der Nut (22) in dem Aufnahmeteil (2) und folglich auch das Entfernen des Einführvorsprungs (11) des Einsteckteils (1) aus dem Aufnahmehohlraum (21) in dem Aufnahmeteil (2) ermöglicht wird, und wobei das in Umfangsrichtung unterbrochene Arretierelement (3) in dem Bereich jedes seiner Endabschnitte (33', 33") angrenzend an die Umfangsunterbrechung mit mindestens einem Betätigungsmittel (34', 34") versehen ist, welches aus dem Bereich der gegenseitigen Überlappung des Einsteckteils (1) und des Aufnahmeteils (2) hinausragt, und wobei mit Hilfe der Betätigungsmittel (34', 34") jeder gewünschte Durchmesser des Arretierelements (3) von außen, insbesondere von dem Bereich der Außenfläche des Einsteckteils (1) her einstellbar ist, wodurch das Arretierelement (3) entweder in die Nut (22) einführbar oder auch aus der Nut (22) herausnehmbar ist.

2. Anordnung nach Anspruch 1, **dadurch gekennzeichnet, dass** eine Auflagefläche (15) an dem Einführvorsprung (11) des Einsteckteils (1) angrenzend an die Endauflagefläche (14) angeordnet ist, mit der der dickere Bereich (12) endet, und eine Dichtung (4), die entlang ihres Umfangs ununterbrochen ist, an der Auflagefläche (15) platziert ist und andererseits ausgestaltet ist, um mit einer Fläche des zylindrischen Aufnahmehohlraums (21) innerhalb des Aufnahmeteils (2) zusammenzuwirken.

3. Anordnung nach Anspruch 2, **dadurch gekennzeichnet, dass** die Dichtung ein flexibler O-Ring ist, der ausgebildet ist, um einerseits mit der Auflagefläche (15) und der Endauflagefläche (14) an dem Einführvorsprung (11) des Einsteckteils (1) und andererseits mit der Oberfläche des zylindrischen Aufnahmehohlraums (21) innerhalb des Aufnahmeteils (2) und auch mit der angrenzenden Auflagefläche (23) zusammenzuwirken.

4. Anordnung nach einem der Ansprüche 1 bis 3, **dadurch gekennzeichnet, dass** das Einsteckteil (1) mit mindestens einer durchgehenden Öffnung (100') versehen ist, die zumindest annähernd entlang der geometrischen Längsachse (100) verläuft, welche durch den Einführvorsprung (11) des Einsteckteils (1) und den Aufnahmehohlraum (21) des Aufnahmeteils verläuft, wobei diese miteinander zu verbinden sind.

5. Anordnung nach einem der Ansprüche 1 bis 3, **dadurch gekennzeichnet, dass** das Aufnahmeteil (2) mit mindestens einer durchgehenden Öffnung (200') versehen ist, die zumindest annähernd entlang der geometrischen Längsachse (100) verläuft, welche durch den Einführvorsprung (11) des Einsteckteils (1) und den Aufnahmehohlraum (21) des Aufnahmeteils verläuft, wobei diese miteinander zu verbinden sind.

6. Anordnung nach Anspruch 4, **dadurch gekennzeichnet, dass** das Einsteckteil (1) rohrförmig ist.

7. Anordnung nach Anspruch 4, **dadurch gekennzeichnet, dass** das Einsteckteil (1) als entsprechend starre Rohrverbindung an einem flexiblen Rohr ausgebildet ist, welches zur Herstellung jeder erforderlichen Verbindung mit dem Aufnahmeteil (2) geeignet ist.

8. Anordnung nach Anspruch 5, **dadurch gekennzeichnet, dass** das Aufnahmeteil (2) rohrförmig ist.

9. Anordnung nach Anspruch 5, **dadurch gekennzeichnet, dass** das Aufnahmeteil (2) als entsprechend starre Rohrverbindung einer flexiblen Rohrleitung ausgebildet ist, welche zur Herstellung einer Verbindung mit dem Einsteckteil (1) geeignet ist.

10. Anordnung nach einem der Ansprüche 1 bis 9, **dadurch gekennzeichnet, dass** mindestens eines der Teile (1, 2), die miteinander verbunden werden sollen, aus einem metallischen Material besteht.

11. Anordnung nach einem der Ansprüche 1 bis 9, **dadurch gekennzeichnet, dass** mindestens eines der Teile (1, 2), die miteinander verbunden werden sollen, aus einem nichtmetallischen Material besteht.

12. Anordnung nach Anspruch 11, **dadurch gekennzeichnet, dass** das nichtmetallische Material ausgewählt ist aus Materialien auf der Basis von Mineralien, insbesondere Keramik, thermoplastischen Materialien oder Duroplasten oder Verbundmaterialien auf der Basis von verstärkten Kunstharzen.

13. Anordnung nach einem der Ansprüche 1 bis 12, **dadurch gekennzeichnet, dass** das Arretierelement (3) aus einem entsprechend festen und elastischen metallischen Material besteht.

14. Anordnung nach einem der Ansprüche 1 bis 13, **dadurch gekennzeichnet, dass** das Arretierelement (3) aus einem entsprechend festen und elastischen nichtmetallischen Material besteht.

15. Anordnung nach einem der Ansprüche 1 bis 14, **dadurch gekennzeichnet, dass** der Querschnitt des Arretierelements (3), durch den sein äußeres Querprofil definiert ist, trapezförmig ist und die Nut (22) an dem Aufnahmeteil (2) ein rechteckiges Profil aufweist, wobei das derartig geformte Arretierelement (3) leichtgängig in die Nut (22) an dem Aufnahmeteil (2) im Wesentlichen ohne die Möglichkeit, in axialer Richtung hin und her verschoben zu werden, einführbar ist.

16. Anordnung nach einem der Ansprüche 1 bis 15, **dadurch gekennzeichnet, dass** der Neigungswinkel (131) an dem Einsteckteil (1) an die Neigung der inneren konischen Fläche (32) an dem Arretierelement (3) derart angepasst ist, dass ein Selbsthalteeffekt zwischen dem Einsteckteil (1) und dem Arretierelement (3) gewährleistet ist.

## Revendications

1. Agencement pour une interconnexion amovible et éventuellement étanche entre des pièces de construction mâle et femelle (1, 2), l'agencement comprenant la pièce femelle (2), la pièce mâle (4) et un élément d'arrêt (3), dans lequel la pièce femelle (2) est munie sur sa partie d'extrémité de connexion (20) d'une cavité de réception essentiellement cylindrique (21), dans laquelle une saillie d'insertion essentiellement cylindrique (11) sur une partie d'extrémité de connexion (10) de ladite pièce mâle (1) peut être insérée en douceur, c'est-à-dire peut être insérée avec un jeu suffisant, et dans lequel ladite pièce mâle (1) et ladite pièce femelle (2) dans leur position de chevauchement au moins partiel le long d'un axe géométrique commun (100) de ladite cavité de réception (21) dans la pièce femelle (2) et de ladite saillie d'insertion (11) sur ladite pièce mâle (1) peuvent être connectées de manière amovible l'une à l'autre au moyen de l'élément d'arrêt (3), et de plus, ladite interconnexion entre ladite pièce mâle (1) et ladite pièce femelle (2) peut éventuellement être scellée au moyen d'au moins un joint d'étanchéité (4),
dans lequel ladite cavité de réception cylindrique (21) dans la pièce femelle (2) est munie d'une rainure continue s'étendant de manière circonférentielle (22), qui est adaptée pour recevoir ledit élément d'arrêt (3), et ladite cavité de réception (21) se termine, à une distance appropriée de ladite rainure (22) dans une direction vers l'intérieur et le long dudit axe géométrique (100), par une surface d'appui radiale (23) qui s'étend au moins approximativement perpendiculairement par rapport audit axe longitudinal (100),
et dans lequel ladite pièce mâle (1) est dans la zone de sa saillie d'insertion (11) munie d'une zone plus épaisse (12), dont le diamètre périphérique est, aux fins de ladite insertion en douceur, adapté au diamètre intérieur de ladite cavité de réception (21) dans ladite pièce femelle (2), et sur laquelle une rainure continue s'étendant de manière circonférentielle (13) est agencée, ladite rainure (13) comprenant au moins une inclinaison conique (131) et au moins une surface d'appui s'étendant radialement (132), qui est disponible sur au moins une partie de la circonférence de ladite saillie d'insertion (11), dans lequel ladite zone plus épaisse (12) sur la pièce mâle (1) se termine, sur sa partie terminale qui est opposée à la pièce mâle (1) en tant que telle, à savoir dans une direction d'insertion de la pièce mâle (1) dans la pièce femelle (2), par une surface d'appui terminale (14) s'étendant radialement,
et dans lequel ledit élément d'arrêt (3) est conçu comme un anneau élastique et discontinu du fait qu'il permet un changement réversible de son diamètre de manière circonférentielle, le profil transversal externe de l'anneau au moins le long de la majorité de sa circonférence correspond au profil transversal de ladite rainure (22) dans la cavité de réception (21) dans la pièce femelle (2), de sorte que ledit élément d'arrêt (3) corresponde alors à ladite rainure (22) tandis que la surface intérieure (32) dudit élément d'arrêt (3) est conique et est apte à s'appuyer sur ladite surface conique (131) de ladite rainure (13) sur la saillie d'insertion (11) sur la partie d'extrémité de connexion (10) de la pièce mâle (1), dans lequel la configuration d'une part de ladite rainure (22) et de ladite surface d'appui (23) dans la cavité de réception (21) dans la pièce femelle (2), et d'autre part de ladite rainure (13) et desdites surfaces d'appui (132, 14) sur la pièce mâle (1) est déterminée de telle manière que lors de l'insertion de ladite pièce mâle (1) dans ladite pièce femelle (2), l'élément d'arrêt (3) soit dans la zone de sa périphérie inséré dans la rainure (22) dans la cavité de réception (21) dans la pièce femelle (2) et soit en même temps dans la zone de sa surface conique intérieure (32) en appui sur ladite inclinaison conique (131) dans la rainure (13) sur la zone plus épaisse (12) de la pièce mâle (1),
dans lequel ladite inclinaison conique (131) dans la rainure (13) sur la pièce mâle (1) diverge dans la direction longitudinale de ladite saillie d'insertion (11) et à l'écart du reste de ladite pièce mâle (1) et donc dans une direction d'insertion de ladite pièce mâle (1) dans ladite pièce femelle (2),
dans lequel la distance entre la surface d'appui terminale radiale (14) sur la pièce mâle (1) et la surface d'appui radiale (23) dans la cavité de réception (21) sur la pièce femelle (2) est au minimum telle qu'au moins un tel déplacement de la pièce mâle (1) par rapport à la pièce femelle (2) le long de l'axe longitudinal (100) est autorisé, que l'élément d'arrêt (3) peut être déplacé le long de la surface conique (131) dans la rainure (13) sur la pièce mâle (1) à un point tel que le retrait dudit élément d'arrêt (3) de la rainure (22) dans la pièce femelle (2) et par conséquent également le retrait de la saillie d'insertion (11) de la pièce mâle (1) de la cavité de réception (21) dans la pièce femelle (2) sont permis, et
dans lequel ledit élément d'arrêt discontinu de manière circonférentielle (3) est, dans la zone de chacune de ses parties terminales (33', 33") adjacente à ladite discontinuité circonférentielle, muni d'au moins un moyen de manipulation (34', 34") faisant saillie à l'extérieur de la zone de chevauchement mutuel de ladite pièce mâle (1) et de ladite pièce femelle (2), et au moyen duquel moyen de manipulation (34', 34") chaque diamètre souhaité de l'élément d'arrêt (3) est réglable de l'extérieur, en particulier de la zone de la surface externe de la pièce mâle (1), par laquelle ledit élément d'arrêt (3) peut être soit inséré dans ladite rainure (22) soit également retiré de ladite rainure (22).

2. Agencement selon la revendication 1, **caractérisé en ce qu'**une surface d'appui (15) est agencée sur la saillie d'insertion (11) de la pièce mâle (1) adjacente à ladite surface d'appui terminale (14), par laquelle se termine ladite zone plus épaisse (12), et un joint d'étanchéité (4), qui est ininterrompu le long de sa circonférence, est placé sur ladite surface d'appui (15) et est en outre adapté pour coopérer avec une surface de la cavité de réception cylindrique (21) à l'intérieur de la pièce femelle (2).

3. Agencement selon la revendication 2, **caractérisé en ce que** ledit joint d'étanchéité est un joint torique souple, qui est apte à coopérer d'une part avec ladite surface d'appui (15) et la surface d'appui terminale (14) sur la saillie d'insertion (11) de la pièce mâle (1), et d'autre part avec la surface de la cavité de réception cylindrique (21) à l'intérieur de la pièce femelle (2) et également avec la surface d'appui adjacente (23).

4. Agencement selon l'une quelconque des revendications 1 à 3, **caractérisé en ce que** la pièce mâle (1) est munie d'au moins une ouverture traversante (100'), qui s'étend au moins approximativement le long dudit axe géométrique longitudinal (100) s'étendant à travers ladite saillie d'insertion (11) de la pièce mâle (1) et ladite cavité de réception (21) de la pièce femelle, qui doivent être connectées l'une à l'autre.

5. Agencement selon l'une quelconque des revendications 1 à 3, **caractérisé en ce que** la pièce femelle (2) est munie d'au moins une ouverture traversante (200'), qui s'étend au moins approximativement le long dudit axe géométrique longitudinal (100) s'étendant à travers ladite saillie d'insertion (11) de la pièce mâle (1) et ladite cavité de réception (21) de la pièce femelle, qui doivent être connectées l'une à l'autre.

6. Agencement selon la revendication 4, **caractérisé en ce que** ladite pièce mâle (1) est tubulaire.

7. Agencement selon la revendication 4, **caractérisé en ce que** ladite pièce mâle (1) est formée comme un raccord de tuyau convenablement rigide sur un tuyau flexible, qui est approprié pour établir chaque interconnexion requise avec la pièce femelle (2).

8. Agencement selon la revendication 5, **caractérisé en ce que** ladite pièce femelle (2) est tubulaire.

9. Agencement selon la revendication 5, **caractérisé en ce que** ladite pièce femelle (2) est formée comme un raccord de tuyau suffisamment rigide d'un tuyau flexible, qui est approprié pour établir une connexion avec la pièce mâle (1).

10. Agencement selon l'une quelconque des revendications 1 à 9, **caractérisé en ce qu'**au moins l'une desdites pièces (1, 2), qui sont prévues pour être connectées l'une à l'autre, est constituée d'un matériau métallique.

11. Agencement selon l'une quelconque des revendications 1 à 9, **caractérisé en ce qu'**au moins l'une desdites pièces (1, 2), qui sont prévues pour être connectées l'une à l'autre, est constituée d'un matériau non métallique.

12. Agencement selon la revendication 11, **caractérisé en ce que** ledit matériau non métallique est choisi parmi des matériaux à base de minéraux, notamment les céramiques, les matériaux thermoplastiques ou les plastiques thermodurcissables ou des matériaux composites à base de résines artificielles renforcées.

13. Agencement selon l'une quelconque des revendications 1 à 12, **caractérisé en ce que** l'élément d'arrêt (3) est constitué d'un matériau métallique suffisamment résistant et élastique.

14. Agencement selon l'une quelconque des revendications 1 à 13, **caractérisé en ce que** l'élément d'arrêt (3) est constitué d'un matériau non métallique suffisamment résistant et élastique.

15. Agencement selon l'une quelconque des revendications 1 à 14, **caractérisé en ce que** la section transversale dudit élément d'arrêt (3), par laquelle son profil transversal externe est défini, est trapézoïdale, et ladite rainure (22) sur la pièce femelle (2) est de profil rectangulaire, dans lequel un tel élément d'arrêt profilé (3) peut être inséré en douceur dans ladite rainure (22) sur la pièce femelle (2) essentiellement sans possibilité d'être déplacé d'avant en arrière dans la direction axiale.

16. Agencement selon l'une quelconque des revendications 1 à 15, **caractérisé en ce que** l'angle d'inclinaison (131) sur la pièce mâle (1) est adapté à l'inclinaison de la surface conique interne (32) sur l'élément d'arrêt (3) de telle sorte que l'effet d'arrêt automatique soit assuré entre la pièce mâle (1) et l'élément d'arrêt (3).
